# EUROPEAN PATENT APPLICATION

(11) **EP 1 835 385 A2**
(43) Date of publication of application: **19.09.2007**
(21) Application number: 07101063.1
(22) Date of filing: 24.01.2007
(51) Int. Cl.: G06F 3/048

(54) **Method and device for fast access to application in mobile communication terminal**

(30) Priority: 14.03.2006 KR 20060023604
(71) Applicant: Samsung Electronics Co., Ltd., Suwon-si, Gyeonggi-Do (KR)
(72) Inventor: Lee, Dong-Kook, Yeongtong-gu, Suwon-si Gyeonggi-do (KR)
(74) Representative: Zimmer, Franz-Josef

(57) **Abstract**

A method and device for fast access to an application in a mobile communication terminal are provided. The method includes upon user's selection of a specific application, displaying an execution picture of the specific application where one or more applications are disposed in a widget type; determining zoom-in requests to any one of the applications based on the widget type; magnifying and displaying the application based on the widget type where the zoom-in is effected.

## Description

The present invention relates generally to an application access method in a mobile communication terminal, and in particular, to a method for fast access to an application in a mobile communication terminal, for easily, simply, and conveniently allowing the access to the application with high user preference.

Owing to the development of technology, mobile communication terminals support not only existing simple voice communication but also various services such as Internet access, message service, and multimedia services.. As these services are gradually expanded, the trend is towards widening the display of the mobile communication terminal along with the number of colors. As users vary their requests as compared to prior usage, it is required to more effectively use the screen space of the mobile communication terminal and utilize it in various methods. Various users' ergonomic desires need to be satisfied while prioritizing a user's convenience.

A conventional mobile communication terminal processes user data and performs several other functions based on the user's desire. A conventional method used for executing the function is based on menu selection input. This method is performed through a procedure of designating a menu associated with a predetermined function, displaying the designated menu in response to a predetermined request input, and, when the user makes a selection, performing a predetermined function depending on the selected menu. Further, in recent years, in an effort to increase the user's convenience a method of executing a function based on icon selection is used.

However, in the conventional mobile communication terminal, execution of a function consists of an application and thus, hierarchical movement through the menu occurs when changing from one application to another for an additional function. Accordingly, a search for a function desired by the user requires moving from an upper menu to a lower menu. Moreover, as the menu provided by the mobile communication terminal expands, a complex process of moving from the upper menu to the lower menu through several depths to search for the menu desired by the user is performed. Since the menu is not constructed on the basis of user data but on every application, a user's interface is interrupted. For example, after the user searches for the menu to send a message to a counterpart, a complex process of again getting out of the current menu and checking a schedule menu should be performed in order to check a schedule with the counterpart.

As described above, a conventional menu construction is functionally monolithic. Thus, the interface should be based on user data, and should also consider the user's convenience even in the display format.

It is, therefore, the object of the present invention to provide a method for fast access to an application in a mobile communication terminal, embodying a user based interface, thereby facilitating and making each application access simple and convenient.
This object is solved by the subject matter of the independent claims.
Preferred embodiments are defined by the subject matter of the dependent claims.
To achieve the above, there is provided a method for fast access to an application in a mobile communication terminal. The method includes upon user's selecting a specific application, displaying an execution picture of the specific application where one or more applications are disposed in a widget type; determining whether or not zoom-in is inputted to any one of the applications based on the widget type; and magnifying and displaying the application based on the widget type where the zoom-in input is effected.

In another aspect of the present invention, there is provided a device for fast access to an application in a mobile communication terminal. The device includes a controller for, upon user's selection of a specific application, controlling and displaying an execution picture of the specific application where one or more applications are disposed in a widget type, and controlling and determining whether or not zoom-in is input for any one of the applications based on the widget type, and magnifying and displaying an area for displaying the application based on the widget type where zoom-in is effected; and a display unit for, under the control of the controller, displaying the specific application execution picture, and magnifying and displaying the application based on the widget type indicated by the zoom-in input.

In a further aspect of the present invention, there is provided a method for fast access to an application in a mobile communication terminal. The method includes providing a picture where a plurality of application symbols are displayed; selecting a specific application symbol from the plurality of application symbols; stepwise magnifying the selected application symbol in response to repetitive zoom-in key press while magnifying and displaying a content comprised in the application symbol; and stepwise reducing the magnified and displayed application symbol in response to repetitive zoom-out key press while restoring it to an original picture.

The present invention will become more apparent from the following detailed description when taken in conjunction with the accompanying drawings in which:
FIG. 1 illustrates a construction of a mobile communication terminal according to the present invention;
FIG. 2 illustrates an example of a phonebook application execution picture according to the present invention;
FIG. 3 illustrates an example of a picture depending on execution of an application based on a widget type according to the present invention;
FIG. 4 illustrates a zoom-in function according to the present invention; and
FIG. 5 is a flowchart illustrating a method for fast access to an application according to the present invention.

A preferred embodiment of the present invention will now be described in detail with reference to the annexed drawings. In the drawings, the same or similar elements are denoted by the same reference numerals even though they are depicted in different drawings. In the following description, detailed description of known functions and configurations incorporated herein has been omitted for conciseness.

The present invention provides a faster application access method based on a user's input. To achieve that goal, one or more different applications are disposed in a widget type in a screen where a specific application is executed. The applications based on the widget type, which mean mini applications of various functions, are embodied in a small window type on the screen. The applications are constructed such that they are magnified and displayed when zoom-in is input in places where a cursor is positioned in the application. Accordingly, the user can directly enter a desired application in the screen where the specific application is executed, without the need to hierarchically navigate between respective menus.

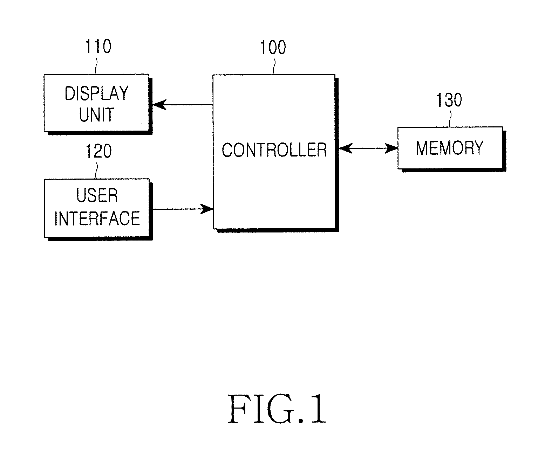

A construction and an operation of the mobile communication terminal having the above functions will be described with reference to FIG. 1. FIG. 1 illustrates the construction of the mobile communication terminal according to the present invention.

As shown in FIG. 1, a typical mobile communication terminal to which the present invention applies, includes a controller 100, a display unit 110, a user interface 120, and a memory 130.
The controller 100 performs general control operations of the mobile communication terminal and, particularly, controls and outputs the application based on the widget type using the display unit 110 according to the present invention.

In a detailed description, if any one menu item is selected from a menu picture, the controller 100 controls and outputs a picture for application execution associated with the selected menu item, using the display unit 110. In the application execution picture, applications associated with a menu with high user preference are disposed in the widget type. The respective applications based on the widget type can be embodied in at least two ways. First, by using a small window having a title for allowing the user to understand whether the application is based on any function, and second, by using a symbol, a picture, and an icon to inform the content of the application. By doing so, the present invention can remarkably shorten the path to a desired menu in one screen without hierarchical movement between the menus.

Execution of the mini applications for various functions displayed on the screen is performed by the following method. The application based on the widget type, which is desired by the user is selected using a zoom-in function. Accordingly, if there is a request for the application based on the widget type, the controller 100 controls the small window in which the application is displayed, that is, a widget area is magnified and displayed. The applications for the menu with high user preference can be disposed in the widget type even in the magnified and displayed widget area. In the applications disposed in the widget type, which are the mini applications of various functions comprised in the mobile communication terminal, content of applications associated with a main menu and applications for operation related to data processing of a currently executed application may be provided in various kinds.

In the present invention, a graphic input device (GID) cursor is added for selecting all objects such as the application based on the widget type in the application execution picture. The GID cursor, an object selection cursor displayed on the display unit 110, operates like a mouse cursor and has a cross shape. The GID cursor is operated on the basis of a rollover function. The rollover function of the present invention refers to the function of changing the color of an edge of a specific portion and displaying a shade when the GID cursor is put on or is rubbed on the position such as an information field, an image, a button, or a widget area. Thus, when the user moves the GID cursor in the picture, the controller 100 changes and displays the field, the image, the button, or the widget area indicated by the position. The information field refers to a field where data depending on the application execution is displayed.

In the case where the GID cursor is positioned in the widget area, when the user inputs a zoom-in request, the respective applications displayed on the screen are executed while the widget area is magnified and displayed. If the user inputs a zoom-out request, the magnified widget area is restored to its original size and position. As described above, the present invention provides a new menu construction and movement method in the mobile communication terminal, thereby allowing the user to enjoy his/her application use, and a fast access method.

Under the control of the controller 100, the display unit 110 receives and displays data regarding key input data from the user interface 120, or displays an operational state and a plurality of information of the terminal using an icon and a character. The display unit 110 may allow the user to visually recognize its state in setting or enabling a necessary function under the control of the controller 100. The display unit 110 according to the present invention magnifies or reduces and displays the widget area for allowing the user to directly execute a different application in a specific application execution picture without the hierarchical movement between the menus, depending on a user's zoom-in or zoom-out input.

In another embodiment of the present invention where a display unit 110 is constructed in a touch screen type, like a user interface 120, the display unit 110 transmits a control signal for user's action in selecting an application based on a widget type. In case where the display unit 110 is embodied using a touch screen, a plurality of numeric keys, function keys, and direction keys displayed on the touch screen may be selected or pressed using an input tool such as a stylus pen.

The user interface 120 includes a plurality of numeric keys and function keys, and input /output data associated with a key selected by the user to the controller 100. According to an embodiment of the present invention, the user interface 120 includes a zoom-in or zoom-out key for magnifying or reducing each of the widget areas associated with the applications based on various widget types. The zoom-in or zoom-out key may be separately provided on the user interface 120, or may be embodied using the function keys for performing other functions. Unlikely, it may be embodied by a previously mapped key combination.

The memory 130 includes a read only memory (ROM) and a random access memory (RAM) for storing a plurality of program and data. In particular, according to an embodiment of the present invention, the memory 130 stores data on a display object application item of a specific application execution picture.

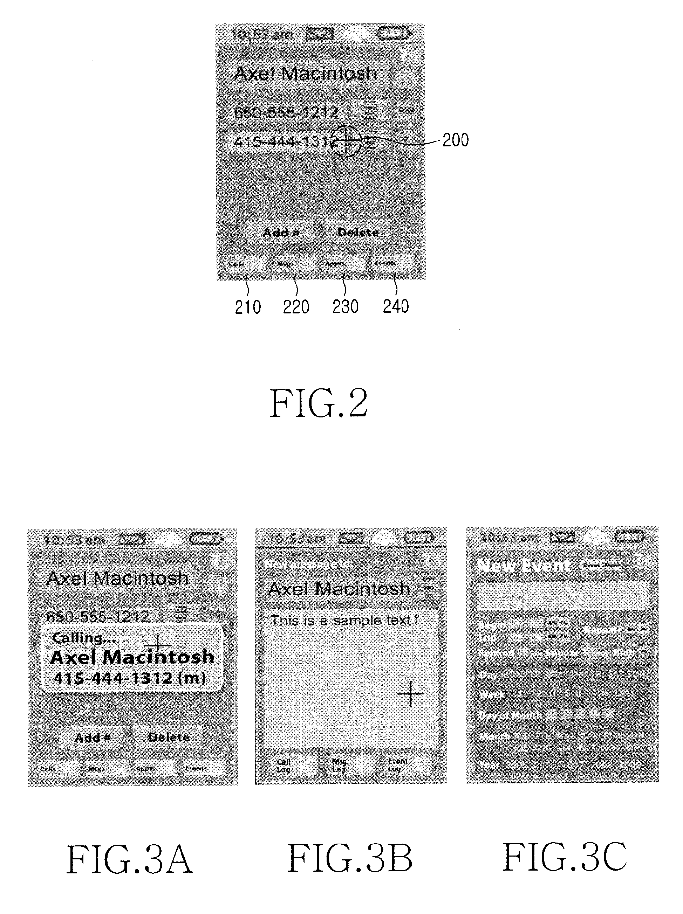

FIG. 2 shows a screen construction for providing the user with faster application access in the mobile communication terminal with the above function. FIG. 2 illustrates an example of a phonebook application execution picture according to the present invention and also an application based on a related widget type. However, this does not limit the scope of the present invention. The application based on the widget type provided in the application execution picture may change depending on the selection of the user or service provider, and terminal manufacturing company.

The phonebook application execution picture of FIG. 2 provides a name field for displaying a name, a dial number field for displaying a dial number associated with the inputted name, buttons for adding and deleting the dial number, the applications 210, 220, 230, and 240 based on the widget type with the high user preference, and the GID cursor 200 for selecting all objects on the screen.

In FIG. 2, it is shown that the dial number field is activated when the GID cursor 200 is positioned on the dial number field. The GID cursor 200 is inactivated when the GID cursor 200 is out of the dial number field. In state where the dial number field or the name field is activated, when a call connection key is pressed, a call connection can be immediately attempted. In order to show activation or inactivation state, the object shows a bright color when the GID cursor is positioned on a specific object, and it shows a dark color when the GID cursor is out of the object. In other words, by changing the color of the edge of the object or by changing the shade of the object depending on the movement of the GID cursor, the user can recognize whether any object is currently activated.

A call application 210 based on the widget type is a widget for call execution. The GID cursor 200 is activated when it is positioned on the application. When the user inputs the zoom-in in the activation state, the widget is magnified and displayed for execution of the application. Even widget items such as a message application 220 for preparing a message, a schedule management application 230 for managing a schedule, and an event application 240 for managing an event are magnified and displayed for the execution of the application in response to the zoom-in input, and are reduced to and displayed in the original size and position depending on the zoom-out input.

In order to describe the above process in more detail, reference is made to FIG. 3 showing an execution picture according to the selection of the application based on the widget type. FIG. 3 exemplifies pictures depending on the execution of the application based on the widget type according to an embodiment of the present invention.

FIG. 3A is an example of a picture in case where the call application 210 of FIG. 2 is selected. FIG 3A exemplifies a case where, in state where the GID cursor moves to the call application 210 in response to user's input, a call function is performed when the user inputs the zoom-in. FIG. 3A exemplifies a case where a name and a dial number of a called party are displayed and a picture for informing in-transmission is output, but various pictures for performing the call function such as displaying of call log information can be also output.

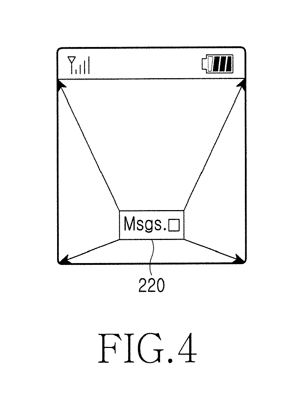

FIG. 3B is an example of a picture in case where the message application 220 of FIG. 2 is selected. FIG. 3B exemplifies a case where a content of the name field of FIG. 2 is displayed in an object field to which a message is to be transmitted, and an input window for preparing the message is displayed for the object. In the message application 220 of FIG. 2, if the GID cursor is positioned on the message application 220 and the zoom-in is input in response to the user's input, the widget area is magnified and displayed in a method of FIG. 4 and is displayed by a full size picture. On contrary, the magnified widget area is restored to the widget type, that is, to the original size and position. FIG. 3C is an example of a picture when the event application 230 of FIG 2 is selected. FIG. 3C exemplifies that an input event or the picture is displayed when the event application 220 based on the widget type is zoomed-in in the phonebook application picture. The widget area where the application based on the widget type is displayed, an area where zoom-in or zoom-out is possible, makes it possible to use the application desired by the user.

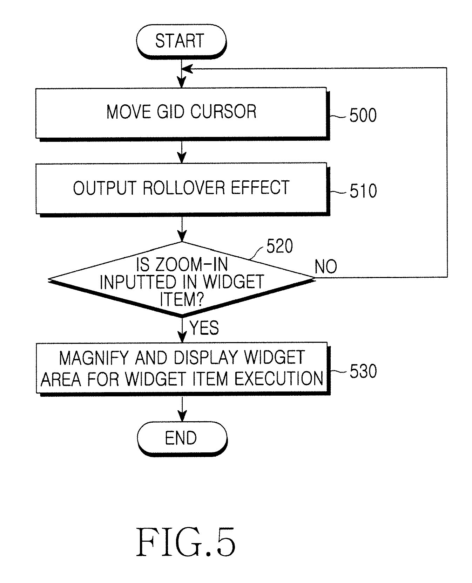

In order to describe a procedure for providing the user-based faster application access method, FIG. 5 is referred to. FIG. 5 is a flowchart illustrating the fast application access method according to an embodiment of the present invention.

Referring to FIG. 5, the controller 100 moves the GID cursor for selecting all objects on a specific application execution picture depending on user's direction key input in step 500, and outputs a rollover effect for the moved widget item in step 510. This is to change the color of the area of the widget item and inform the user whether any widget item is currently activated. Thus, when the moved GID cursor is positioned on any one application of the widget items, the application is activated inform that the GID cursor currently moves to the application.

In step 520, the controller 100 moves the GID cursor and activates the widget item and then, determines whether or not there is the zoom-in input in the moved widget item. If there is a zoom-in input, in step 530, the controller 100 magnifies and displays the widget area for widget item execution in the method of FIG. 4. In other words, the application based on the widget type is magnified and displayed as the picture for executing the application. And then, if the application execution associated with a desired widget item is finished, the user can restore the magnified widget area to the original size and position using the zoom-out.

As described above, the present invention provides a new menu construction and movement method in the mobile communication terminal; thereby contributing a new dynamism in the user's enjoyment in using the menu. The present invention also provides a fast access method for a high-grade user, and three-dimensional space simulation.

As described above, the present invention simply and conveniently executes a different application without the hierarchical movement between the menus in one screen, thereby remarkably shortening the path to the desired menu. Furthermore, the present invention advantageously of facilitates accessibility and mobility to each application by achieving fast access to a desired application using the zoom-in, and restoring to its original state using the zoom-out function.

While the invention has been shown and described with reference to a certain preferred embodiment thereof, it will be understood by those skilled in the art that various changes in forms and details may be made therein without departing from the scope of the invention as further defined by the appended claims.

## Claims

1. A method for fast access to an application in a mobile communication terminal, comprising the steps of:
selecting a specific application upon user's action, displaying an execution picture of the specific application where one or more applications are disposed in a widget type;
determining whether zoom-in is input to any one of the applications based on the widget type; and
magnifying and displaying the application based on the widget type where zooming-in is effected.

2. The method of claim 1, wherein applications associated with a menu with high user preference are disposed in a widget type based on a small window type in the specific application execution picture.

3. The method of claim 1 or 2, further comprising:
moving a graphic input device cursor for object selection displayed on the specific application execution picture depending on user's input; and
when the moved graphic input device cursor is positioned on any one application, activating the any one application to inform that the graphic input device cursor moves to the any one application.

4. The method of claim 3, wherein a widget area for execution of the any one application is magnified and displayed as indicated by user's action.

5. The method of claim 3, wherein the activation of the application is to change a color of an application where the graphic input device cursor is positioned.

6. The method of claim 3, wherein the graphic input device cursor is operated on the basis of a rollover function.

7. The method of one of claims 1 to 6, wherein a phonebook application execution picture includes a name field for displaying a name, a dial number field for displaying a dial number associated with the name, at least one button for adding and deleting the dial number, and applications based on a plurality of widget types in cases where the specific application selected by the user is a phonebook application.

8. The method of claim 7, further comprising performing a call connection when a call connection key is pressed in state where the graphic input device cursor for object selection is positioned at any one field of the phonebook application execution picture.

9. The method of one of claims 1 to 8, further comprising:
determining whether zoom-out is requested by the user in state where the application based on the widget type is magnified and displayed; and
reducing the magnified application to its original size and position.

10. A device for fast access to an application in a mobile communication terminal comprising:
a controller for, controlling and displaying an execution picture of the specific application where one or more applications are disposed in a widget type, and controlling and determining zoom-in requests for any one of the applications based on the widget type, and magnifying and displaying an area for displaying the application based on the widget; and
a display unit for displaying the specific application execution picture under the control of the controller, magnifying and displaying the application based on the widget type.

11. The device of claim 10, wherein the applications associated with a menu with high user preference are disposed in the widget type based on a small window type.

12. The device of claim 10 or 11, wherein the controller moves a graphic input device cursor for object selection displayed on the specific application execution picture, and, when the moved graphic input device cursor is positioned on the any one application, activates the any one application to inform that the graphic input device cursor moves to the any one application.

13. The device of claim 12, wherein the graphic input device cursor is operated on the basis of a rollover function.

14. The device of one of claims 10 to 13, wherein the controller determines zoom-out requests by the user in state where the application is based on the widget type, and reduces the magnified application to its original size and position.

15. A method for fast access to an application in a mobile communication terminal, the method comprising the steps of:
providing a picture where a plurality of application symbols is displayed;
selecting a specific application symbol from the plurality of application symbols;
magnifying the selected application symbol in response to repetitive zoom-in key input while magnifying and displaying a content comprised in the application symbol; and
reducing the magnified and displayed application symbol in response to repetitive zoom-out key input while restoring it to an original picture.

16. The method of claim 15, wherein a pointer is positioned at the specific application symbol in selecting the specific application symbol..

17. The method of claim 15 or 16, wherein a data input field and sub application symbols are comprised in the magnified and displayed application symbol.

18. The method of claim 17, wherein the application symbol is reduced while the input data is stored if input data is in the data input field and the zoom-out key is pressed.
